# DEMANDE DE BREVET EUROPEEN

(11) **EP 4 386 445 A1**
(43) Date de publication de la demande: **19.06.2024**
(21) Numéro de dépôt: 23213768.7
(22) Date de dépôt: 01.12.2023
(51) Int. Cl.: G01S 13/86, G01S 7/41, G01S 7/40

(54) **PROCÉDÉ DE DÉTERMINATION D'UNE ÉLÉVATION DE LA SURFACE LIBRE D'UNE ÉTENDUE D'EAU AU MOYEN D'UN RADAR ET D'UN DRONE**

(30) Priorité: 16.12.2022 FR 2213588
(71) Demandeur: IFP Energies nouvelles, 92500 Rueil-Malmaison (FR)
(72) Inventeur: MERIGAUD, Alexis, 92852 RUEIL-MALMAISON CEDEX (FR); TONA, Paolino, 92852 RUEIL-MALMAISON CEDEX (FR)
(74) Mandataire: IFP Energies nouvelles

(57) **Abrégé**

La présente invention concerne un procédé de détermination d'une élévation de surface libre (ESL) d'une zone d'étendue d'eau. Le procédé met en oeuvre une mesure au moyen d'un radar (MRA), et une mesure localisée au moyen d'un drone (MDR) équipé d'un capteur, dans le but de calibrer (CAL) un modèle de reconstruction de l'élévation de surface libre (MOD) dans la zone considérée. Puis, on applique ce modèle calibré (MOD CAL) à des mesures en temps réel du radar (MRA) pour déterminer l'élévation de la surface libre (ESL).

## Description

### Domaine technique

La présente invention concerne le domaine de la caractérisation des vagues, en particulier pour le suivi, l'exploitation et la commande (contrôle) d'un système soumis à des vagues, flottant ou non.

Afin de caractériser les vagues au sein d'une étendue d'eau (par exemple : une mer, un océan, un lac), on utilise notamment des séries temporelles d'élévation de la surface libre de l'eau. Cette élévation de la surface libre donne la hauteur d'eau (donc la hauteur des vagues), par rapport à la situation où la surface n'est pas perturbée (mer plate, par exemple), en tout point de la surface d'eau. La mesure d'élévation de la surface libre est une problématique répandue, afin de répondre à plusieurs enjeux. Un des premiers enjeux est la caractérisation fine (à l'échelle des vagues individuelles) de l'état de la mer, qui est le plus souvent caractérisée par des descriptions de la distribution statistique des hauteurs des vagues individuelles, telles que le spectre, la hauteur significative et la période moyenne. Ces descripteurs, sont couramment utilisés pour le suivi d'une navigation, le suivi d'opérations en mer, la surveillance de plateforme de production d'énergie, la surveillance de site pour l'exploitation d'énergies marines. Disposer d'une mesure d'élévation de surface libre permet non seulement de réaliser des caractérisations statistiques plus précises, mais également de réaliser des prédictions à court terme (de quelques secondes à quelques minutes) de la hauteur de la houle et des mouvements d'un système flottant qui en découlent. Ces prédictions permettent par exemple de détecter l'arrivée d'un train de vagues potentiellement dangereuses pour une opération donnée (par exemple le transfert de personnel à bord d'une éolienne ou d'un bateau) ou, au contraire, d'une période d'accalmie, qui permettrait de réaliser l'opération en question. Un autre enjeu des prédictions de vagues et de houle réalisées à partir de l'élévation de surface libre est le contrôle de système flottant (notamment au moyen d'une commande prédictive) : par exemple, pour assurer la stabilisation d'un navire, pour assurer la compensation d'un mouvement, par exemple la compensation de pilonnement (qui peut être intéressant pour une plateforme flottante de production d'hydrocarbures), pour assurer le contrôle en temps réel d'éoliennes flottantes ou des systèmes houlomoteurs (notamment dans le but de maximiser l'énergie produite et/ou pour diminuer la fatigue des composants de tels systèmes).

### Technique antérieure

Plusieurs technologies ont été développées pour mesurer et déterminer l'élévation de la surface libre.

Certaines de ces solutions permettent de mesurer une caractéristique résultante des vagues ou de la houle en seulement un point de mesure, par exemple au moyen d'une bouée instrumentée, ce qui ne permet pas d'avoir une indication de l'élévation de la surface libre en tout point d'une zone d'étendue d'eau.

Les radars maritimes, par exemple les radars à bande X, que l'on retrouve sur tous les gros navires et de nombreuses installations en mer, sont une technologie particulièrement intéressante pour mesurer les vagues à distance, bien que leur usage initial soit plutôt la navigation et la prévention de la collision. Les images produites par les radars maritimes détectent non seulement des cibles ou obstacles telles que les navires et les côtes, mais aussi les réflexions de la surface de la mer, connues sous le nom de "fouillis de mer", causées par l'interaction entre les ondes du radar et les petites ondulations de la surface provoquées par le vent. La rétrodiffusion de cette surface rugueuse révèle la forme sous-jacente des vagues. Avec un traitement approprié, il est en principe possible de réaliser des mesures de vagues, et ce, sur un vaste champ de vision (jusqu'à environ 5 km de portée, selon la hauteur d'installation de l'antenne radar et l'état de mer), avec une bonne résolution spatiale (de l'ordre de 5 m en distance et de 1° en azimut) et une résolution temporelle suffisante (une image toutes les 1 à 3 secondes) pour suivre les vagues individuellement.

Plus précisément, le principe de la mesure de vagues par radar est le suivant : les ondes électromagnétiques émises par le radar interagissent, en vertu de la loi de Bragg, avec les rides (variations de hauteur) de surface de l'eau, dont la longueur d'onde est d'ordre centimétrique (comme celles des ondes du radar). Il en résulte un signal rétrodiffusé, le fouillis de mer ou encore écho de mer, qui retourne au récepteur radar, et dont l'intensité est modulée par les vagues (qui peuvent avoir une longueur comprise entre une dizaine à plusieurs centaines de mètres) via un ensemble de mécanismes qui ne sont pas encore tous bien compris. Les images radar présentent donc des motifs qui ressemblent aux vagues, et à partir desquels celles-ci peuvent théoriquement être reconstruites, avec un traitement adéquat.

Les images radar peuvent fournir des estimations d'état de mer, c'est-à-dire des informations statistiques sur la hauteur des vagues, et leur contenu énergétique selon la fréquence et la direction. Mais elles devraient aussi permettre d'aller bien plus loin, avec une véritable reconstruction de l'élévation de surface libre (ESL) « vague à vague », tel un film en trois dimensions de la surface de la mer. Une telle reconstruction vague-à-vague, avec la vaste portée et la résolution du radar, se prête à de très nombreuses applications. Elle est notamment idéale à des fins de monitoring dans le domaine des énergies marines renouvelables, et ouvre la voie à la prédiction en temps réel des vagues, ou du mouvement d'un navire, sur des horizons de plusieurs minutes, permettant ainsi d'améliorer la faisabilité et la sécurité d'un grand nombre d'opérations en mer.

Toutefois, malgré leurs perspectives prometteuses, les radars ne donnent qu'une mesure très indirecte des vagues, via des images, ou des signaux d'intensité, du fouillis de mer. L'intensité du fouillis de mer est modulée par la vitesse orbitale du fluide à la surface et l'angle d'incidence du faisceau radar sur la surface de la mer, qui peuvent être linéairement reliés à l'élévation de surface libre que l'on cherche à mesurer. D'autres facteurs liés aux vagues viennent complexifier cette modulation, en particulier les effets d'ombrage (lorsque certaines zones de la surface de la mer sont cachées géométriquement par des vagues plus proches du radar) ou encore la présence de micro-déferlement. A ces modulations induites par les vagues, s'ajoutent d'autres facteurs qui altèrent le signal dû aux vagues, en particulier la fonction d'amplification du signal reçu par le radar, la présence de bruit de chatoiement, ou encore des facteurs météorologiques comme la pluie ou les embruns, qui peuvent générer de la rétrodiffusion.

Pour contourner ce problème, la reconstruction de vagues à partir d'images radar repose généralement sur la « méthode standard » qui est décrite notamment dans les documents suivants :
Young, I. R., Rosenthal, W., & Ziemer, F. (1985). A three-dimensional analysis of marine radar images for the détermination of ocean wave directionality and surface currents. Journal of Geophysical Research: Océans, 90(C1), 1049-1059.
Nieto Borge, J., Rodriguez, G. R., Hessner, K., & Gonzàlez, P. I. (2004). Inversion of marine radar images for surface wave analysis. Journal of Atmospheric and Oceanic Technology, 21(8), 1291-1300.

Cette méthode se passe d'un modèle explicite de formation (et d'inversion) des images radar : dans cette approche, le champ de vision du radar est découpé en zones rectangulaires, dans lesquelles une transformée de Fourier tri-dimensionnelle du signal est appliquée. Les composantes du signal liées aux vagues sont alors identifiées et filtrées en utilisant la relation de dispersion pour les ondes gravitaires, qui relie la fréquence à la longueur d'onde. On considère ensuite que les composantes ainsi obtenues sont reliées linéairement aux composantes du signal d'élévation de surface libre. Il reste enfin à calibrer en amplitude le signal reconstruit, pour obtenir des images de l'état de mer ayant la bonne énergie. On le voit, la méthode standard évite le recours à une connaissance détaillée des mécanismes de formation des images, mais repose sur un nombre considérable de paramètres empiriques, comme les paramètres du filtrage, ceux de la fonction de transfert de modulation, et les paramètres de la calibration en amplitude. L'optimisation ou la vérification de ces paramètres peut reposer sur l'utilisation de capteurs supplémentaires, comme des bouées instrumentées, la centrale inertielle d'un navire, de la télédétection laser (capteur LiDAR) ou encore un capteur d'ondes microsismiques sur le rivage. Une autre piste consiste à avoir recours à des radars cohérents, qui détectent aussi le signal Doppler dû au mouvement de la surface. En effet, la vitesse Doppler peut, en principe, être utilisée pour reconstruire l'élévation de surface libre sans passer par l'étape de calibration via une fonction de transfert par modulation ; toutefois, pour obtenir des signaux Doppler stables, le radar doit observer les mêmes points sur une période relativement longue, ce qui rend les procédures de mesure proposées assez complexes. De plus, l'immense majorité des radars maritimes actuels ne disposent pas de cette caractéristique. L'utilisation de mesures complémentaires est donc nécessaire, ou du moins recommandée, pour aboutir à une reconstruction précise du champ de vagues à partir de mesures radar.

En outre, le procédé décrit dans la demande de brevet FR3108152 (WO2021/180502) met en oeuvre un capteur ou plusieurs capteurs (par exemple un radar, un LiDAR, un accéléromètre, un capteur de déplacement, un capteur de pression, etc.) mesurant l'élévation de surface libre de la houle ou des caractéristiques qui en résultent en un ou plusieurs points et en déduit des prédictions de la houle ou de caractéristiques résultantes de la houle au moyen de fonctions de transferts. Ce procédé permet une bonne prédiction d'une résultante de la houle mais ne permet pas de déterminer l'élévation de la surface libre en tout point d'une zone à partir d'un signal radar.

### Résumé de l'invention

L'invention a pour but de déterminer, en temps réel, l'élévation de surface libre en tout point d'une zone d'étendue d'eau, de manière précise et simple. Pour cela, l'invention concerne un procédé de détermination d'une élévation de surface libre d'une zone d'étendue d'eau. Le procédé met en oeuvre une mesure (distribuée) au moyen d'un radar, et une mesure localisée au moyen d'un drone équipé d'un capteur, dans le but de calibrer un modèle de reconstruction de l'élévation de surface libre dans la zone considérée. Puis, on applique ce modèle calibré à des mesures en temps réel du radar pour déterminer l'élévation de la surface libre. Le drone permet une mesure précise localisée, qui permet de calibrer le modèle avec une valeur précise, ce qui rend le modèle plus précis. En outre, le drone peut réaliser des mesures dans des zones non accessibles ou peu accessibles par le radar (par exemple en fonction des conditions météorologiques ou en raison d'ombres ou d'objets sur l'étendue d'eau). De plus, le pilotage du drone permet de varier la position des points de mesure (les points de mesure ne sont pas fixes) : il est donc possible d'adapter la calibration en fonction des conditions rencontrées.

L'invention concerne également un système de détermination d'une élévation de surface libre, et un ou des procédés de suivi, d'exploitation ou de contrôle d'un système soumis à des vagues mettant en oeuvre un tel procédé.

L'invention concerne un procédé de détermination d'une élévation de la surface libre d'une zone d'une étendue d'eau au moyen d'un radar et d'au moins un drone équipé d'au moins un capteur de mesure à distance de l'élévation de la surface libre. Pour ce procédé, on met en oeuvre les étapes suivantes :
a. On construit un modèle de reconstruction d'élévation de la surface libre, ledit modèle relie un signal dudit radar à l'élévation de la surface libre ;
b. On mesure un signal représentatif de l'élévation la surface libre de ladite zone d'étendue d'eau au moyen dudit radar ;
c. On pilote ledit au moins un drone pour réaliser au moins une mesure localisée en un point de mesure de la zone d'étendue d'eau au moyen dudit capteur équipant ledit au moins un drone ;
d. On calibre ledit modèle de reconstruction d'élévation de la surface libre au moyen de ladite au moins une mesure localisée ; et
e. On applique ledit modèle de reconstruction d'élévation de la surface libre calibré à un signal représentatif de la surface libre mesuré par ledit radar pour déterminer l'élévation de la surface libre de la zone d'étendue d'eau.

Selon un mode de réalisation, on définit ledit au moins un point de mesure en fonction dudit signal mesuré par ledit radar.

Avantageusement, on acquiert au moins une condition météorologique, et ledit modèle de reconstruction de l'élévation de surface libre est fonction de ladite au moins une condition météorologique, de préférence ladite au moins une condition météorologique est choisie parmi la vitesse du vent, la direction du vent, les précipitations, la température et l'état de mer.

Selon un aspect, ledit capteur équipant ledit au moins un drone est choisi parmi un capteur LiDAR, une caméra thermique, une caméra optique, un radar à faisceau vertical.

Conformément à une mise en oeuvre, on construit ledit modèle de reconstruction d'élévation de la surface libre au moyen une fonction de transfert de modulation, d'une méthode d'assimilation, par une méthode d'apprentissage automatique ou par une méthode d'apprentissage profond.

Selon une option de réalisation, on réalise les étapes de pilotage dudit au moins un drone et de calibration hors ligne, et on applique ledit modèle de reconstruction de l'élévation de la surface libre calibré à un signal mesuré par le radar en ligne.

Conformément à une option de réalisation, on réalise les étapes de pilotage dudit au moins un drone et de calibration en ligne, pour calibrer ledit modèle de reconstruction de l'élévation de surface libre en continu.

De manière avantageuse, on détermine l'élévation de la surface libre en temps réel.

De plus, l'invention concerne un système de détermination de l'élévation de surface libre d'une zone d'une étendue d'eau qui comprend au moins un radar, au moins un drone équipé d'au moins un capteur de mesure d'élévation de la surface libre à distance, un système de pilotage dudit au moins un drone et des moyens informatiques pour mettre en oeuvre le procédé de détermination de l'élévation de surface libre selon l'une des caractéristiques précédentes.

En outre, l'invention concerne un procédé de suivi, d'exploitation, ou de contrôle d'un système soumis à des vagues au sein d'une étendue d'eau, dans lequel on met en oeuvre les étapes suivantes :
a. On détermine l'élévation de la surface libre de ladite étendue d'eau au moyen du procédé de détermination d'élévation de surface libre selon l'une des caractéristiques précédentes ; et
b. On supervise, on exploite, ou on contrôle ledit système soumis à des vagues en fonction de l'élévation de la surface libre de ladite étendue d'eau déterminée.

D'autres caractéristiques et avantages du procédé et du système selon l'invention, apparaîtront à la lecture de la description ci-après d'exemples non limitatifs de réalisations, en se référant aux figures annexées et décrites ci-après.

### Liste des figures

La figure 1 illustre les étapes du procédé de détermination d'une élévation de surface libre selon un premier mode de réalisation de l'invention.
La figure 2 illustre les étapes du procédé de détermination d'une élévation de surface libre selon un deuxième mode de réalisation de l'invention.
La figure 3 illustre les étapes du procédé de détermination d'une élévation de surface libre selon un troisième mode de réalisation de l'invention.
La figure 4 illustre les étapes du procédé de détermination d'une élévation de surface libre selon une première mise en oeuvre du troisième mode de réalisation de l'invention.
La figure 5 illustre les étapes du procédé de détermination d'une élévation de surface libre selon une deuxième mise en oeuvre du troisième mode de réalisation de l'invention.
La figure 6 illustre une élévation de la surface de libre de référence, et un signal obtenu par un radar, pour un exemple illustratif simulé.
La figure 7 illustre une élévation de surface libre reconstruite à partir d'un capteur radar au moyen d'un procédé selon l'art antérieur et une élévation de surface libre de référence, pour l'exemple de la figure 6.
La figure 8 illustre, en plusieurs angles et plusieurs distances, le module et la phase de la fonction de transfert de modulation déterminé par application du procédé selon l'art antérieur à l'exemple des figures 6 et 7.
La figure 9 illustre, en plusieurs angles et plusieurs distances, la hauteur de l'élévation de surface libre en fonction du temps, déterminé par plusieurs procédés, pour un exemple d'application.

### Description des modes de réalisation

L'invention concerne un procédé de détermination de l'élévation de surface libre d'une zone d'une étendue d'eau. On rappelle que l'élévation de la surface libre est la hauteur d'eau en un point d'une étendue d'eau par rapport à la surface d'eau qui n'aurait aucune variation de hauteur (qui ne serait nullement perturbée). Ainsi, l'élévation de la surface libre traduit la hauteur des vagues ou de la houle. Une étendue d'eau peut être une mer, un océan, un lac, un fleuve, etc. La zone considérée par le procédé selon l'invention, est une zone d'intérêt, notamment pour le suivi, l'exploitation ou le contrôle d'un système soumis à des vagues. L'étendue de cette zone d'intérêt peut dépendre du système soumis à des vagues. En variante, l'étendue de cette zone d'intérêt peut correspondre à la zone de mesure du radar mis en oeuvre dans le procédé.

Le procédé selon l'invention met en oeuvre au moins un radar et au moins un drone équipé d'au moins un capteur de mesure à distance de l'élévation de la surface libre.

Pour ce procédé, on met en oeuvre les étapes suivantes :
1) Construction d'un modèle de reconstruction de l'élévation de surface libre
2) Mesure indirecte des vagues par radar
3) Pilotage de drone et mesure localisée
4) Calibration du modèle de reconstruction de l'élévation de surface libre
5) Détermination de l'élévation de surface libre

Les étapes 1 et 3 à 5 peuvent être mises en oeuvre par des moyens informatiques, notamment un ordinateur, un serveur, ou un calculateur. Les moyens informatiques comprennent au moins un processeur et au moins une mémoire informatique. L'étape 1 peut être réalisée une fois unique avant, pendant ou après les étapes 2 et 3. Les étapes seront détaillées dans la suite de la description.

Selon un mode de réalisation de l'invention, la détermination de l'élévation de la surface libre de la zone d'étendue d'eau peut être mise en oeuvre en temps réel. Ainsi, le cas échéant, on peut suivre, exploiter ou contrôler en temps-réel un système soumis à des vagues. Pour ce mode de réalisation, une étape de mesure par radar est effectuée en temps réel. « En temps réel » veut dire que la mesure est disponible aussitôt qu'elle est prise.

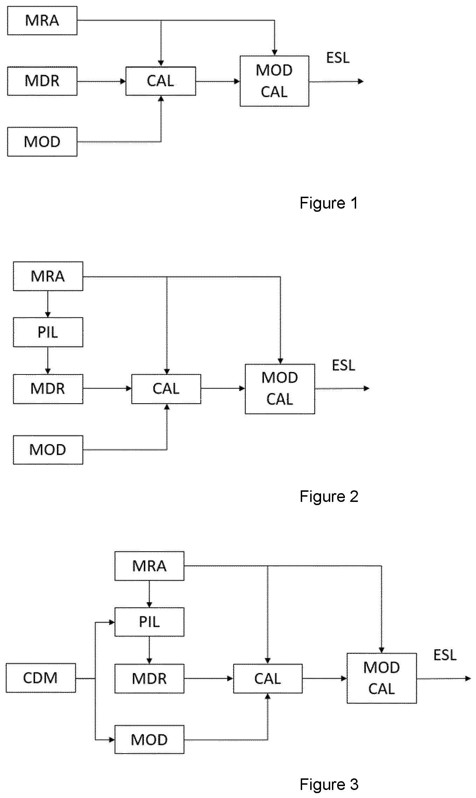

La figure 1 illustre, schématiquement et de manière non limitative, les étapes du procédé selon un premier mode de réalisation de l'invention. Dans un premier temps, on construit un modèle de reconstruction d'élévation de la surface libre MOD. On réalise ensuite une mesure au moyen du radar MRA. Puis, on pilote et on réalise une mesure localisée d'élévation de surface libre au moyen d'un drone MDR. Les mesures radar MRA et du drone MDR sont utilisées pour calibrer CAL le modèle de reconstruction d'élévation de la surface libre MOD. On forme ainsi un modèle de reconstruction de l'élévation de surface libre calibré MOD CAL. On applique ce modèle calibré MOD CAL à une mesure radar MRA pour déterminer une élévation de surface libre ESL.

Selon un mode de réalisation, on peut piloter le drone en au moins un point de mesure défini en fonction de la mesure radar. Par exemple, en fonction d'une zone où la mesure radar est imprécise, par exemple en raison de la présence d'une ombre, d'une structure, etc. Additionnellement ou alternativement, on peut déterminer un point de mesure dans des zones différentes de la zone d'intérêt pour essayer de compenser les variations de la mesure du radar selon la direction et la distance.

La figure 2 illustre, schématiquement et de manière non limitative, les étapes du procédé selon un tel deuxième mode de réalisation de l'invention. Les étapes identiques au premier mode de réalisation de la figure 1 ne sont pas redécrits. Le procédé comprend une étape de pilotage PIL du drone en fonction de la mesure radar MRA. Cette étape de pilotage du drone PIL permet d'obtenir la mesure par le capteur du drone MDR en au moins un point de mesure.

Conformément à une mise en oeuvre, le procédé peut comprendre une étape de d'acquisition d'au moins une condition météorologique (de préférence avec plusieurs conditions météorologiques). Par exemple, la (ou les) condition(s) météorologique(s) peut (ou peuvent) être choisie(s) parmi la vitesse du vent, la direction du vent, les précipitations, la température, l'état de mer, etc. Ensuite, on peut déterminer l'au moins un point de mesure en fonction de la (les) condition(s) météorologique(s). Ainsi, on peut réaliser une mesure localisée d'élévation de surface libre en un point où la mesure radar est affectée par la (les) condition(s) météorologique(s).

La figure 3 illustre, schématiquement et de manière non limitative, les étapes du procédé selon un tel troisième mode de réalisation de l'invention. Les étapes identiques au premier mode de réalisation de la figure 1 et au deuxième mode de réalisation de la figure 2 ne sont pas redécrits. Le procédé comprend une étape d'acquisition d'au moins une condition météorologique CDM. La condition météorologique acquise est utilisée dans l'étape de pilotage du drone PIL et dans la construction du modèle de reconstruction de l'élévation de la houle MOD.

Selon une première mise en oeuvre de l'invention, l'étape de calibration peut être faite hors ligne. En d'autres termes, l'étape de calibration est réalisée une seule fois, puis on utilise le modèle calibré en ligne en temps réel. Ainsi, on peut utiliser un modèle et une calibration complexe, pour obtenir un modèle complet de reconstruction de l'élévation de surface libre, ce modèle complet étant apte à être appliqué en ligne en temps réel. Pour cette mise en oeuvre de l'invention, les étapes de mesure par drone, de mesure radar et de calibration sont réalisées hors ligne. Et en ligne, on réalise une autre mesure radar en ligne et on applique, en ligne, le modèle calibré à cette mesure radar en ligne.

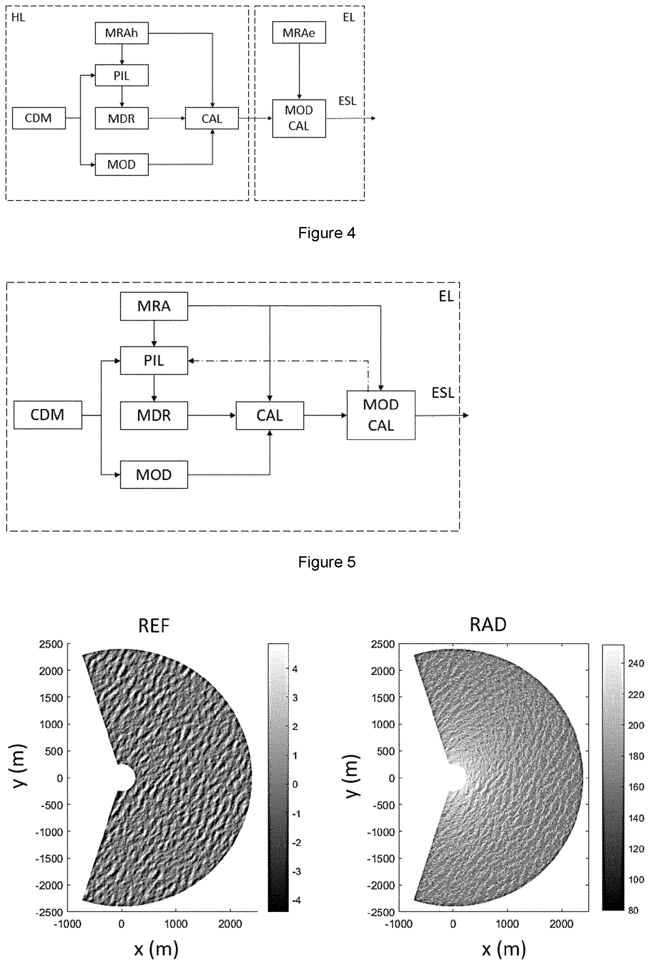

La figure 4 illustre, schématiquement et de manière non limitative, les étapes du procédé selon une telle mise en oeuvre. La figure 4 illustre cette mise en oeuvre pour le troisième mode de réalisation de la figure 3. Toutefois, cette mise en oeuvre peut également être appliquée aux modes de réalisation des figures 1 et 2. Les étapes décrites en relation avec les précédentes figures ne sont pas redécrites. Pour cette mise en oeuvre, certaines étapes sont réalisées hors ligne HL, et certaines sont réalisées en ligne EL. La mesure radar hors ligne utilisée pour la calibration est notée MRAh, et la mesure radar en ligne utilisée pour la détermination de l'élévation de surface libre est notée MRAe. Ainsi, hors ligne HL, on réalise la mesure radar MRAh, l'acquisition de conditions météorologiques CDM, le pilotage de l'au moins un drone PIL, la mesure par capteur du drone MDR, la construction du modèle de reconstruction de l'élévation de surface MOD et la calibration CAL. En ligne EL, on réalise la mesure radar en ligne MRAe et on applique le modèle de reconstruction d'élévation de surface calibré MOD CAL à la mesure radar en ligne MRAe.

Selon une deuxième mise en oeuvre de l'invention, l'étape de calibration peut être mise en oeuvre en ligne, en continu. En d'autres termes, le modèle de reconstruction de l'élévation de surface libre est continûment calibré avec de nouvelles mesures par drone. Ainsi, le modèle de reconstruction de l'élévation de surface libre est adapté en temps réel avec de nouvelles mesures localisées, ce qui permet d'obtenir un modèle précis à tout moment et en tout point de la zone d'intérêt. Pour cette mise en oeuvre, toutes les étapes sont réalisées en ligne en temps réel.

La figure 5 illustre, schématiquement et de manière non limitative, les étapes du procédé selon une telle mise en oeuvre. La figure 5 illustre cette mise en oeuvre pour le troisième mode de réalisation de la figure 3. Toutefois, cette mise en oeuvre peut également être appliquée aux modes de réalisation des figures 1 et 2. Les étapes décrites en relation avec les précédentes figures ne sont pas redécrites. Pour cette mise en oeuvre, toutes les étapes sont réalisées en ligne EL : on réalise la mesure radar MRA, l'acquisition de conditions météorologiques CDM, le pilotage de l'au moins un drone PIL, la mesure par capteur du drone MDR, la construction du modèle de reconstruction de l"élévation de surface MOD la calibration CAL, et on applique le modèle de reconstruction d'élévation de surface calibré MOD CAL. Pour cette mise en oeuvre, le pilotage PIL peut prendre en compte un retour du modèle calibré MOD CAL pour déterminer au moins une des mesures localisées.

### 1) Construction d'un modèle de reconstruction de l'élévation de surface libre

Lors de cette étape, on construit un modèle de reconstruction d'élévation de surface libre. Un tel modèle de reconstruction de l'élévation de surface libre relie un signal de mesure d'un radar à une élévation de surface libre. En d'autres termes, le modèle de reconstruction d'élévation de surface libre a pour entrée un signal de mesure d'un radar et a pour sortie une élévation de surface libre en tout point d'une zone d'étendue d'eau. Pour la calibration de ce modèle à l'étape 4, le modèle peut dépendre d'au moins un paramètre, qui est ajusté lors de la calibration. En variante, le modèle peut dépendre d'au moins une pondération, qui est ajustée lors de la calibration.

Selon un mode de réalisation de l'invention, on peut construire le modèle de reconstruction d'élévation de surface libre au moyen d'une fonction de transfert de modulation, notée FTM (ou MTF de l'anglais « modulation transfer function »). La construction d'un tel modèle ne nécessite pas un nombre important de mesures. Le document suivant décrit un exemple d'un tel modèle :
Chen, Z., Zhang, B., He, Y. et al. (2015). A new modulation transfer function for océan wave spectra retrieval from X-band marine radar imagery. Chin. J. Océan. Limnol. 33, 1132-1141 (2015)

Selon un mode de réalisation de l'invention, on peut construire le modèle de reconstruction d'élévation de surface libre par assimilation de données, c'est-à-dire en minimisant une fonction de coût définie comme la différence entre les mesures radar et les prédictions d'un modèle linéaire ou non linéaire d'évolution des vagues sur un intervalle de temps qui est appelé intervalle d'assimilation. Un exemple de cette approche est donné dans le document suivant :
Aragh, Sina & Nwogu, Okey & Lyzenga, David. (2008). Improved Estimation of Océan Wave Fields from Marine Radars Using Data Assimilation Techniques. Proceedings of the International Offshore and Polar Engineering Conférence.

Dans ce cas, les paramètres du modèle de reconstruction de l'élévation de surface libre ajustés lors de la calibration sont les paramètres de la méthode d'assimilation.

Selon un mode de réalisation de l'invention, on peut construire le modèle de reconstruction de l'élévation de surface libre par une méthode d'apprentissage automatique ou par une méthode d'apprentissage profond. La construction d'un tel modèle ne nécessite pas de connaissance a priori des phénomènes physiques. Pour ce mode de réalisation, on peut mettre en oeuvre les étapes suivantes :
- on construit une base d'apprentissage, qui comprend des signaux de mesures radar et des mesures de l'élévation de la surface libre, alternativement ou cumulativement, la base d'apprentissage peut comprendre des signaux de mesure radar simulés, et/ou des mesures de l'élévation de la surface libre simulées (ce type de mesures simulées est appelé mesures « synthétiques ») et
- on construit un modèle de reconstruction de l'élévation de surface libre au moyen d'une méthode d'apprentissage automatique entraînée sur la base d'apprentissage construite, le modèle de reconstruction de l'élévation de surface libre associant une élévation de surface libre à un signal de mesure radar.

L'apprentissage automatique peut être une méthode supervisée ou non, telle qu'un réseau de neurones, une forêt aléatoire, une machine à vecteur support, etc. Par exemple, si le modèle est construit au moyen d'un réseau de neurones, alors l'étape de calibration peut consister à modifier certaines pondérations du réseau de neurones.

En variante, la construction du modèle de reconstruction d'élévation de surface peut être mise en oeuvre par toute méthode analogue.

De manière avantageuse, la construction du modèle de reconstruction d'élévation de surface peut dépendre de conditions météorologiques. Ainsi, le modèle peut prendre en compte ces conditions météorologiques pour améliorer la précision du modèle. Par exemple, pour la construction par apprentissage automatique, la base d'apprentissage peut comprendre en outre les conditions météorologiques.

### 2) Mesure indirecte des vagues par radar

Lors de cette étape, on mesure un signal représentatif de l'élévation de surface libre de la zone d'étendue d'eau au moyen d'un radar. En d'autres termes, on réalise une mesure au moyen du radar de la zone de l'étendue d'eau. Le radar fournit une mesure indirecte de l'élévation de la surface libre sur une surface de mesure (qui peut correspondre à la zone d'intérêt). On appelle mesure indirecte, une mesure qui est corrélée à l'élévation de surface libre de la houle de manière complexe et qui requiert une procédure de reconstruction pour être exploitable. C'est le cas notamment, de l'intensité du signal radar, affectée par des modulations induites par les vagues (vitesse orbitale à la surface, angle d'incidence du faisceau radar, effets d'ombrage, micro-déferlements, etc.), et par le radar lui-même (fonction d'amplification du signal reçu, bruit de chatoiement), etc. Le signal de mesure du radar est l'intensité normalisée du signal rétrodiffusé par la mer, de préférence avec aussi peu de traitements que possible. Ce signal peut être normalement disponible, sous forme numérisée, en sortie des radars de navigation de dernière génération. Pour cette configuration, un dispositif de numérisation peut être prévu pour pouvoir exploiter le signal analogique envoyé à un écran radar. On peut considérer que le radar est une mesure indirecte sur deux dimensions de l'élévation de surface libre. Ainsi, le radar peut fournir une série temporelle sur deux dimensions de l'élévation de surface libre.

Selon un mode de réalisation, le radar peut être un radar à bande X. La bande X est un segment de la région des micro-ondes du spectre électromagnétique, avec une gamme de fréquences de 8 à 12 GHz et une longueur d'onde d'environ 3 cm. Un radar à bande X permet une disponibilité de la mesure aussitôt qu'elle est prise. De plus, un tel radar permet un vaste champ de vision (jusqu'à environ 5 km de portée, selon la hauteur d'installation de l'antenne radar et l'état de mer), avec une bonne résolution spatiale (par exemple de l'ordre de 5 m en distance et de 1° en azimut) et une bonne résolution temporelle (par exemple une image toutes les 1 à 3 secondes) pour suivre la houle « vague à vague ». Alternativement, le radar peut être un radar à bandes proches de la bande X (bande Ku, notamment, ou bande S), avec de meilleures résolutions temporelles et/ou spatiales, ou toute technologie analogue.

Selon un aspect, le radar peut être un radar côtier ou un radar équipant un système flottant, par exemple un radar équipant un navire, une plateforme flottante, ou un radar équipant une plateforme fixe.

Pour le procédé selon l'invention, on réalise une mesure radar en temps réel, pour l'application du modèle calibré. En outre, on réalise une mesure radar pour la calibration du modèle. Cette mesure radar pour la calibration peut être réalisée hors ligne ou en ligne en fonction de la mise en oeuvre envisagée (cf. modes de réalisation des figures 4 et 5 décrites ci-dessus).

### 3) Pilotage de drone et mesurée localisée

Lors de cette étape, on pilote l'au moins un drone pour réaliser une mesure localisée d'élévation de surface libre au moyen du capteur équipant l'au moins un drone. La mesure localisée est réalisée en un point de mesure de la zone d'étendue d'eau. Ainsi, on réalise au moins une mesure géoréférencée d'élévation de la surface libre pour la calibration du modèle de reconstruction.

Selon un aspect de l'invention, le drone est volant et comporte au moins un capteur de mesure à distance de l'élévation de surface libre. Le capteur peut de préférence être un capteur de mesure directe de l'élévation de surface libre. On appelle « mesure directe », une mesure directement exploitable de l'élévation de la surface libre des vagues ou de la houle, fournie par un capteur que l'on calibre une fois pour toutes et est totalement autonome par la suite. Au contraire, un radar tel qu'utilisé à l'étape 2 fournit une mesure indirecte. Ainsi, on peut considérer que le drone réalise une mesure directe à une dimension de l'élévation de surface libre (point de mesure).

Selon des exemples de réalisation, le capteur équipant le drone peut être choisi parmi un capteur LiDAR (télédétection par laser), une caméra thermique, une caméra optique, un radar à faisceau vertical, ou tout capteur analogue.

Selon un mode de réalisation, on peut déterminer la position de chaque point de mesure, dans le but d'améliorer le modèle de reconstruction de l'élévation de surface libre. La détermination de la position de chaque point de mesure peut avantageusement être automatique. La position de chaque point de mesure peut dépendre du signal radar mesuré, pour déterminer au moins un point de mesure pour lequel la mesure radar n'est pas précise, par exemple en raison d'une ombre, d'un objet, la présence de micro-déferlement, ou autre. Pour le mode de réalisation pour lequel on acquiert au moins une condition météorologique, on peut déterminer la position de chaque point de mesure en fonction de la condition météorologique.

Pour ce mode de réalisation, on pilote le drone pour qu'il se place à la verticale du point de mesure, qu'il y adopte un vol stationnaire, le temps de réaliser une mesure à distance de l'élévation de la surface libre, au moyen d'au moins un capteur équipant le drone.

Conformément à une mise en oeuvre de l'invention, le drone peut être piloté à plusieurs altitudes par rapport au niveau de la surface d'eau, afin d'améliorer la précision de la mesure localisée.

Selon un aspect, le procédé peut mettre en oeuvre une pluralité de mesures localisées en une pluralité de points de mesure, au moyen du capteur d'un drone, ou au moyen d'une pluralité de drones équipés de capteur. Avantageusement, une partie de la pluralité de points mesures peut être alignée, de manière à réaliser des mesures dans une direction déterminée. De préférence, les points de mesure au sein d'un alignement peuvent être régulièrement espacés. De manière avantageuse, les points de mesure peuvent être répartis sur plusieurs alignements.

Pour la mise en oeuvre pour laquelle la calibration est réalisée hors ligne, cette étape de pilotage du drone et de mesure localisée peut être mise en oeuvre hors ligne, une seule fois. Ainsi, l'utilisation du drone est limitée dans le temps, et une fois la calibration terminée, le drone peut être appliqué à un autre procédé.

Pour la mise en oeuvre pour laquelle la calibration est réalisée en ligne, cette étape de pilotage du drone et de mesure localisée peut être mise en oeuvre en continu et en ligne. Ainsi, le modèle peut constamment être calibré, ce qui apporte une précision plus importante du modèle calibré.

Afin de déterminer l'élévation de surface libre à partir du capteur équipant le drone, on peut réaliser préalablement une calibration de la mesure du capteur équipant le drone. La méthodologie de calibration du système de mesure de houle embarqué sur drone dépend de la technologie du capteur de mesure.

Selon un premier exemple, s'il s'agit d'un LiDAR à balayage, on peut par exemple appliquer la méthodologie décrite dans le document suivant :
Huang, Z., Yeh, C., Tseng, K., and Hsu, W. (2018). A UAV-RTK Lidar System for Wave and Tide Measurements in Coastal Zones. Journal of Atmospheric and Oceanic Technology 35, 8, 1557-1570,

Cette méthode est adaptée pour un système de mesure composé d'un drone aérien, d'un lidar, d'un système de référence d'altitude et de cap (AHRS) et d'un système de navigation par satellite (GNSS) à cinématique en temps réel (RTK). Dans ce cas, la calibration du capteur de mesure du drone sert à obtenir les paramètres nécessaires pour transformer les données LiDAR brutes en données d'élévation de surface libre géoréférencées et peut être réalisée à terre, à l'aide de mesures répétées sur deux plaques horizontales.

Selon un deuxième exemple, pour un drone équipé d'un système de mesure par caméras optiques stéréoscopiques on peut envisager l'utilisation de la méthodologie et boîte à outils WASS décrits dans le document suivant :
Bergamasco, F., Torsello, A., Sclavo, M., Barbariol, F., Benetazzo, A. (2017). WASS: An open-source pipeline for 3D stéréo reconstruction of ocean waves, Computers and Geosciences, vol. 107, pp.28-36, 2017 DOI: 10.1016/j.cageo.2017.07.001.

Cette méthode permet de récupérer automatiquement les paramètres extrinsèques de la plateforme stéréoscopique (nécessaires pour reconstruire l'élévation de surface libre), de sorte qu'il n'est pas nécessaire d'effectuer une calibration directement sur le site marin, ou bien de réaliser une calibration intrinsèque en utilisant une cible de référence (un objet suffisamment gros vu par les deux caméras). Quelques adaptations peuvent être à prévoir par rapport à la calibration d'un système stéréoscopique purement stationnaire (par exemple, si on veut faire voler le drone à des altitudes différentes, on peut prévoir une calibration différente pour chaque altitude de vol).

### 4) Calibration du modèle de reconstruction de l'élévation de surface libre

Lors de cette étape, on calibre le modèle de reconstruction de l'élévation de surface libre construit à l'étape 1 au moyen de la mesure localisée d'élévation de surface libre réalisée à l'étape 3. En d'autres termes, on adapte le modèle de reconstruction d l'élévation de surface libre, de telle sorte qu'au niveau des points de mesure, la mesure d'élévation de surface libre soit cohérente avec la sortie du modèle de reconstruction de l'élévation de surface libre. La calibration du modèle de reconstruction de l'élévation de surface libre prend également en compte la mesure radar réalisée à l'étape 2 comme entrée du modèle pour obtenir la sortie du modèle. Grâce à cette calibration, le modèle de reconstruction d'élévation de surface libre calibré est précis en tout point de la zone d'intérêt.

Pour rappel, cette étape peut être réalisée une seule fois préalablement hors ligne, ou peut être réalisée en continu en ligne. Pour la mise en oeuvre hors-ligne, les paramètres du modèle de reconstruction de l'élévation de surface libre peuvent être déterminés grâce à un grand nombre de mesures localisées, couvrant un ensemble de conditions (notamment les conditions météorologiques). La méthodologie de calibration peut alors être effectuée « ex-post » (c'est-à-dire après la campagne de mesures) et reposer sur des calculs intensifs. Pour la mise en oeuvre en ligne, le modèle de reconstruction d'élévation de surface libre peut être tel que ses paramètres peuvent être ajustés en temps réel, en fonction des mesures directes réalisées par le(s) drone(s).

Pour le mode de réalisation pour lequel le modèle de reconstruction de l'élévation de surface dépend d'un paramètre, la calibration consiste à adapter ce paramètre, pour obtenir la cohérence entre la mesure d'élévation de surface libre localisée et la sortie du modèle de reconstruction de l'élévation de surface au point de mesure. Dans ce cas, le modèle de reconstruction de l'élévation de surface libre peut comporter un ou plusieurs paramètres, et leur calibration consiste à trouver les paramètres appropriés pour obtenir une élévation de surface libre aussi précise que possible à partir des mesures radar. Les meilleurs paramètres dépendent, en toute généralité, des caractéristiques du radar, de ses réglages, de son installation, et des caractéristiques de l'état de mer et de l'atmosphère dans la zone observée (inclus dans les conditions météorologiques).

La méthodologie de calibration du modèle de reconstruction d'élévation de surface libre dépend du modèle de reconstruction de l'élévation de surface libre considéré, ainsi que de la mise en oeuvre considérée (hors ligne ou en ligne).

Selon un premier exemple, pour lequel on construit le modèle de reconstruction de l'élévation de surface libre au moyen d'une fonction de transfert de modulation (FTM), on peut appliquer la méthode décrite dans le document suivant :
Chen, Z., Zhang, B., He, Y. et al. (2015). A new modulation transfer function for océan wave spectra retrieval from X-band marine radar imagery. Chin. J. Océan. Limnol. 33, 1132-1141 (2015)

Pour cette méthode, une fonction de transfert de modulation calibrée est obtenue en divisant le spectre de nombre d'onde une dimension (1D) estimé à partir des mesures radar par le spectre de nombre d'onde 1D estimé à partir des mesures ponctuelles d'élévation de surface libre réalisées par une bouée. Pour le procédé selon l'invention, on remplace les mesures obtenues par la bouée par celles réalisées par le drone, à la demande du système de coordination de mesure.

Pour les autres constructions de modèle de reconstruction d'élévation de surface libre, on peut mettre en oeuvre des méthodes similaires.

### 5) Détermination de l'élévation de surface libre

Lors de cette étape, on applique le modèle de reconstruction de l'élévation de surface libre calibré à l'étape 4 au signal de mesure du radar de l'étape 2 pour déterminer l'élévation de surface libre de la zone d'étendue d'eau. En d'autres termes, on détermine une élévation de surface libre en tout point de la zone d'intérêt en tant que sortie du modèle de reconstruction de l'élévation de surface libre calibré, qui a pour entrée un signal de mesure du radar.

Pour cette étape, le signal de mesure du radar utilisé est un signal de mesure en ligne. Ainsi, pour la mise en oeuvre de la calibration hors ligne, le procédé met en oeuvre une mesure radar hors ligne pour la calibration du modèle, et une mesure radar en ligne pour l'application du modèle calibré. De plus, pour la mise en oeuvre de la calibration en ligne, le procédé met en oeuvre une mesure radar en continu.

De plus, l'invention concerne un système de détermination d'élévation de surface libre. Un tel système comprend :
- Au moins un radar,
- Au moins un drone équipé d'au moins un capteur de mesure à distance de l'élévation de surface libre,
- Un système de pilotage de chaque drone, et
- Des moyens informatiques (par exemple un ordinateur, un serveur ou un calculateur, qui comprend au moins un processeur et au moins une mémoire) pour mettre en oeuvre le procédé de détermination de l'élévation de surface libre selon l'une quelconque des variantes précédemment décrites ou l'une quelconque des combinaisons de variantes précédemment décrites.

Selon un mode de réalisation, le système de détermination d'élévation de surface libre peut comprendre des moyens de communication entre les différents dispositifs. Concernant les systèmes de liaison de données, la communication avec le drone et/ou son système de pilotage et acquisition peut se faire par ondes radio. La communication entre le radar, le système informatique et le système de pilotage de chaque drone, peut se faire par toutes sortes de bus informatique, y compris par transmission à distance. De préférence, le moyen informatique mettant en oeuvre la calibration peut avoir plutôt vocation à être physiquement proches du radar, notamment pour la grande quantité de données à échanger. Avantageusement, l'élévation de surface libre déterminée par le système peut être partagée normalement sur un bus de communication informatique, notamment un bus de communication informatique connecté à un système exploitant cette mesure en temps-réel ou non (par exemple un système de suivi, exploitation ou contrôle d'un système soumis à des vagues).

En outre, l'invention concerne un procédé de suivi (supervision), d'exploitation ou de contrôle (commande), de préférence un procédé d'exploitation ou de contrôle, d'un système soumis à des vagues (tel qu'une plateforme flottante ou non, un navire, un système houlomoteur par exemple), dans lequel on met en oeuvre les étapes suivantes :
a) On détermine l'élévation de la surface libre d'une zone d'une étendue d'eau au moyen du procédé dé détermination d'élévation de surface libre selon l'une quelconque des variantes ou des combinaisons de variantes décrites précédemment ; et
b) On contrôle le système soumis aux vagues en fonction de l'élévation de la surface libre déterminée.

Ainsi, le procédé selon l'invention permet un suivi, une exploitation ou un contrôle d'un système soumis aux vagues, pour augmenter sa performance, et/ou limiter la fatigue du système soumis aux vagues et/ou pour améliorer la faisabilité et la sécurité d'un grand nombre d'opérations en mer.

Selon un mode de réalisation de l'invention, le procédé de suivi, d'exploitation ou de contrôle peut comporter une étape de prédiction (en avance de phase) de l'élévation de la surface libre de la zone d'étendue d'eau au moyen de l'élévation de la surface libre déterminée, et on réalise le contrôle en fonction de la prédiction de l'élévation de la surface libre de manière à anticiper le contrôle à la future élévation de la surface libre prédite, avant son arrivée sur le système à suivre, exploiter ou contrôler.

Le système soumis aux vagues peut notamment être choisi parmi un navire, un porte-avion, une plateforme de production d'énergie (par exemple une plateforme pétrolière), un système de production d'énergie renouvelable (par exemple une éolienne offshore, un système houlomoteur), ou un dispositif permettant de transférer du personnel ou du matériel en mer (passerelle, grue), ou tout système analogue.

L'étape de suivi, d'exploitation ou de contrôle peut notamment consister en :
- Navigation d'un navire dans une zone où l'élévation de surface libre est minimale, ainsi le navire peut éviter des conditions maritimes sévères telles que des vagues importantes,
- Stabilisation d'une plateforme flottante ou d'un navire en fonction de l'élévation de surface libre,
- Contrôle (par exemple une commande prédictive) d'un système de production d'énergie renouvelable pour maximiser l'énergie produite ou pour réduire la fatigue du système de production en fonction de l'élévation de surface libre :
   ∘ Contrôle d'une machine électrique équipant un système houlomoteur pour optimiser la puissance produite en fonction de la hauteur de la houle,
   ∘ Contrôle de l'angle d'orientation des pales, et/ou de la nacelle d'une éolienne en fonction des vagues et de la houle,
- Réalisation d'une opération en mer lorsque que l'élévation de surface libre est minimale, par exemple :
   ∘ Sauvetage d'un naufragé depuis un navire,
   ∘ Récupération d'un objet à la surface de l'eau depuis un navire,
   ∘ Installation d'un objet marin ou sous-marin depuis un navire ou une plateforme (par exemple une conduite d'hydrocarbures),
   ∘ Décollage ou atterrissage d'un avion sur un porte-avion, etc.
   ∘ Transfert de personnel depuis un navire ou une plateforme (par exemple, maintenance d'une éolienne en mer)

### Exemples :

Les caractéristiques et avantages du procédé selon l'invention apparaîtront plus clairement à la lecture de l'exemple d'application ci-après.

Le premier exemple a pour but de montrer l'intérêt d'une calibration au moyen de mesures localisées. Pour ce premier exemple, on utilise un modèle de reconstruction d'élévation de surface libre au moyen d'une fonction de transfert de modulation.

On simule une élévation de surface de référence, pour une mer Gaussienne avec un spectre de type JONSWAP. Le spectre JONSWAP est une relation empirique qui définit la distribution de l'énergie des vagues en fonction de la fréquence en eaux profondes, qui est particulièrement adaptée aux mers du Nord de l'Europe. Cette simulation est réalisée en superposant un grand nombre d'ondes sinusoïdales de différentes fréquences et direction, et avec des amplitudes et phases tirées aléatoirement. La simulation est d'une durée de 10 minutes avec un pas de temps de 1 seconde. La pente radiale de la surface de l'élévation de surface libre (par rapport à la direction d'observation du radar) est également calculée. A partir de l'élévation de surface libre de référence et de sa pente radiale, on forme une image radar synthétique (c'est-à-dire une mesure radar simulée) à l'aide d'un modèle semblable à celui décrit dans le document suivant :
Lyzenga, D. R., & Walker, D. T. (2015). A simple model for marine radar images of the ocean surface. IEEE Geoscience and Remote Sensing Letters, 12(12), 2389-2392.

Ce modèle inclut la modulation d'inclinaison (de l'anglais « tilt modulation »), l'ombrage, du bruit de chatoiement, et une amplification logarithmique du signal.

La figure 6 illustre, schématiquement et de manière non limitative, l'élévation de surface libre de référence REF, et l'image radar RAD, dans un repère de coordonnées x, y. Pour l'élévation de surface libre de référence REF, le niveau de gris traduit la hauteur de l'eau. Pour l'image radar RAD, le niveau de gris traduit le signal mesuré par le radar et numérisé sur 8 bits (compris donc entre 0 et 255).

Ensuite, on utilise le modèle de reconstruction de l'élévation de surface libre au moyen de la fonction de transfert de modulation moyenne (procédé selon l'art antérieur) pour reconstruire l'élévation de surface libre au moyen de l'image radar.

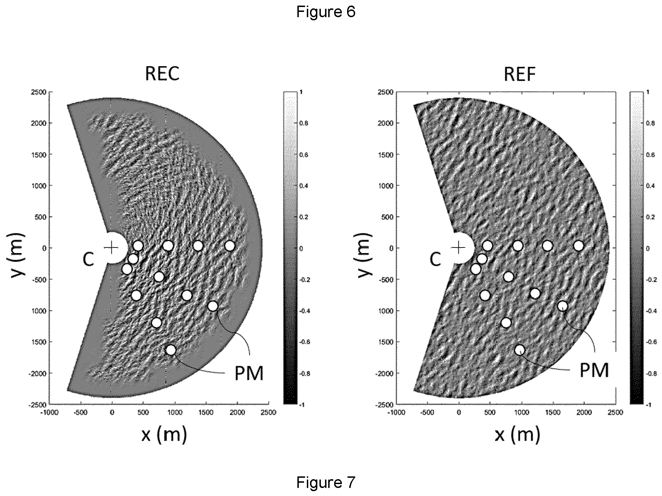

La figure 7 illustre, schématiquement et de manière non limitative, l'élévation de surface libre reconstruite REC (selon le procédé selon l'art antérieur avec une fonction de transfert de modulation moyenne) et de référence REF. On constate que la reconstruction selon le procédé de l'art antérieur n'est pas totalement précise.

Sur cette figure, on identifie trois séries de points PM, pour lesquels on détermine la fonction de transfert de modulation. Ces points sont référencés dans le repère (x, y) en fonction de la distance au centre C (x=0 et y=0) et d'un angle par rapport à la droite y=0.

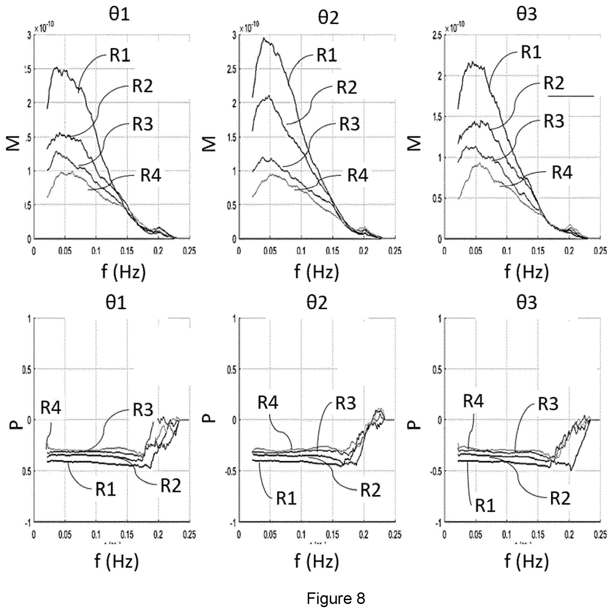

La figure 8 illustre le module M et la phase P de la fonction de transfert de modulation en fonction de la fréquence f en Hz, pour ces points PM de la figure 7. Les courbes de gauche correspondent à un angle θ1 de 60° par rapport à la droite y=0, les courbes du centre correspondent à un angle θ2 de 30° par rapport à la droite y=0 et les courbes de droite correspondent à un angle θ3 de 0° par rapport à la droite y=0. Les références R1 à R4 désignent la distance par rapport au centre du repère C avec R1=600m, R2=1000m, R3=1400m et R4=1800m.

On remarque que les courbes varient fortement d'un point à un autre. Par conséquent, l'application d'un procédé selon l'art antérieur avec une fonction de transfert de modulation moyenne ne permet pas d'obtenir précisément le spectre de la houle, ni, a fortiori, une reconstruction précise de l'élévation de surface libre « vague à vague » de la zone d'intérêt.

De plus, on peut remarquer que la fonction de transfert de modulation présente des variations qui relativement régulières en fonction de la distance et de l'azimut (ici par exemple, la pente et l'amplitude de la fonction de transfert diminuent avec la distance).

Avec le procédé selon l'invention, en faisant voler le drone à quelques distances et azimuts bien choisis, et ce quelques minutes à chaque emplacement, il est possible de calibrer les paramètres d'un modèle simple des variations spatiales de la fonction de transfert de modulation, et ainsi exploiter de manière précise les images radar sur de grandes surfaces.

Pour le deuxième exemple, on réalise une reconstruction de l'élévation de surface libre à l'aide de fonctions de transferts locales obtenues en moyennant la fonction de transfert dans un rayon de 100m autour de chaque point PM et on la compare à la reconstruction obtenue à l'aide d'une fonction de transfert moyenne.

Ensuite, en chacun des douze points PM définis précédemment à la figure 7, on applique à l'élévation de surface libre reconstruite (dont le diagramme REC représente une représentation à un instant donné) l'inverse de la fonction de transfert : soit la fonction de transfert locale correspondant à la zone autour du point considéré, soit la fonction de transfert moyenne.

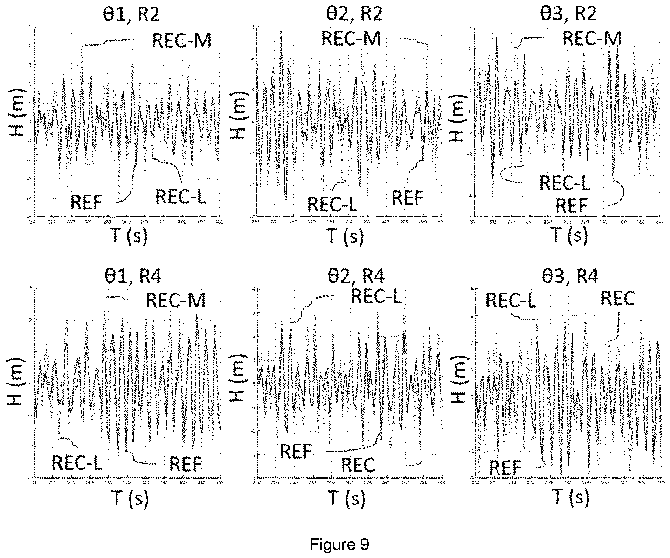

La figure 9 montre les séries temporelles d'élévation de surface libre H en m ainsi reconstruites en fonction du temps T en s, pour les six points, respectivement à 1000 m et 1800 m de distance du radar pour les angles θ1, θ2, θ3. Les séries indiquées par REC-L sont celles obtenues à partir des fonctions de transfert locales, tandis que celles obtenues par la fonction de transfert moyenne sont indiquées par REC-M. Les séries temporelles de référence sont indiquées par REF. On remarque que les amplitudes des signaux sont assez différentes.

Le tableau 1, indique pour les six points, respectivement à R2 = 1000 et R4 = 1800 m de distance du radar pour les angles θ1, θ2, θ3, les erreurs quadratiques entre les reconstructions par fonction de transfert locale (ERR-REC-L) et globale (ERR-REC-M) et l'élévation de surface libre de référence.

| | θ1, R2 | θ2, R2 | θ3, R2 | θ1, R4 | θ2, R4 | θ3, R4 |
|---|---|---|---|---|---|---|
| ERR-REC-L | 0.4763 | 0.5302 | 0.5531 | 0.6027 | 0.6666 | 0.6813 |
| ERR-REC-M | 0.7365 | 0.6572 | 0.6660 | 0.7064 | 0.9483 | 0.9640 |

Les reconstructions par fonction de transfert locale sont clairement plus précisés. Ainsi, le procédé selon l'invention permet une détermination de l'élévation de la surface libre par rapport à un procédé mettant en oeuvre une fonction de transfert de modulation constante.

## Revendications

1. Procédé de détermination d'une élévation de la surface libre (ESL) d'une zone d'une étendue d'eau au moyen d'un radar et d'au moins un drone équipé d'au moins un capteur de mesure à distance de l'élévation de la surface libre, **caractérisé en ce qu'**on met en oeuvre les étapes suivantes :
a. On construit un modèle de reconstruction d'élévation de la surface libre (MOD), ledit modèle relie un signal dudit radar à l'élévation de la surface libre ;
b. On mesure un signal représentatif de l'élévation la surface libre de ladite zone d'étendue d'eau au moyen dudit radar (MRA) ;
c. On pilote ledit au moins un drone pour réaliser au moins une mesure localisée (MDR) en un point de mesure de la zone d'étendue d'eau au moyen dudit capteur équipant ledit au moins un drone ;
d. On calibre (CAL) ledit modèle de reconstruction d'élévation de la surface libre au moyen de ladite au moins une mesure localisée ; et
e. On applique ledit modèle de reconstruction d'élévation de la surface libre calibré (MOD CAL) à un signal représentatif de la surface libre mesuré par ledit radar pour déterminer l'élévation de la surface libre de la zone d'étendue d'eau.

2. Procédé selon la revendication 1, dans lequel on définit ledit au moins un point de mesure en fonction dudit signal mesuré par ledit radar (MRA).

3. Procédé selon l'une des revendications précédentes, dans lequel on acquiert au moins une condition météorologique (CDM), et ledit modèle de reconstruction de l'élévation de surface libre (MOD) est fonction de ladite au moins une condition météorologique (CDM), de préférence ladite au moins une condition météorologique (CDM) est choisie parmi la vitesse du vent, la direction du vent, les précipitations, la température et l'état de mer.

4. Procédé selon l'une des revendications précédentes, dans lequel ledit capteur équipant ledit au moins un drone est choisi parmi un capteur LiDAR, une caméra thermique, une caméra optique, un radar à faisceau vertical.

5. Procédé selon l'une des revendications précédentes, dans lequel on construit ledit modèle de reconstruction d'élévation de la surface libre (MOD) au moyen une fonction de transfert de modulation, d'une méthode d'assimilation, par une méthode d'apprentissage automatique ou par une méthode d'apprentissage profond.

6. Procédé selon l'une des revendications précédentes, dans lequel on réalise les étapes de pilotage (PIL) dudit au moins un drone et de calibration hors ligne (HL), et on applique ledit modèle de reconstruction de l'élévation de la surface libre calibré (MOD CAL) à un signal mesuré par le radar en ligne (MRAe).

7. Procédé selon l'une des revendications 1 à 5, dans lequel on réalise les étapes de pilotage dudit au moins un drone (MDR) et de calibration (CAL) en ligne (EL), pour calibrer (CAL) ledit modèle de reconstruction de l'élévation de surface libre en continu.

8. Procédé selon l'une des revendications précédentes, dans lequel on détermine l'élévation de la surface libre (ESL) en temps réel.

9. Système de détermination de l'élévation de surface libre d'une zone d'une étendue d'eau qui comprend au moins un radar, au moins un drone équipé d'au moins un capteur de mesure d'élévation de la surface libre à distance, un système de pilotage dudit au moins un drone et des moyens informatiques pour mettre en oeuvre le procédé de détermination de l'élévation de surface libre selon l'une des revendications précédentes.

10. Procédé de suivi, d'exploitation, ou de contrôle d'un système soumis à des vagues au sein d'une étendue d'eau, dans lequel on met en oeuvre les étapes suivantes :
a. On détermine l'élévation de la surface libre (ESL) de ladite étendue d'eau au moyen du procédé de détermination d'élévation de surface libre selon l'une des revendications 1 à 8 ; et
b. On supervise, on exploite, ou on contrôle ledit système soumis à des vagues en fonction de l'élévation de la surface libre de ladite étendue d'eau déterminée.
